# EUROPEAN PATENT SPECIFICATION

(11) **EP 4 508 800 B1**
(45) Date of publication and mention of the grant of the patent: **31.12.2025**
(21) Application number: 23721180.0
(22) Date of filing: 11.04.2023
(51) Int. Cl.: H04L 9/40, H04W 12/088

(54) **MANAGING DYNAMIC UPDATES FOR SECURITY GROUPS**
VERWALTUNG DYNAMISCHER AKTUALISIERUNGEN FÜR SICHERHEITSGRUPPEN
GESTION DE MISES À JOUR DYNAMIQUES POUR GROUPES DE SÉCURITÉ

(30) Priority: 14.04.2022 US 202263331176 P; 27.01.2023 US 202318160880
(43) Date of publication of application: 19.02.2025
(73) Proprietor: Boost SubscriberCo L.L.C., Englewood, Colorado 80112 (US)
(72) Inventor: PELETZ, Brian, Aurora, CO (US)
(74) Representative: Reddie & Grose LLP
(86) International application number: PCT/US2023/018206
(87) International publication number: WO 2023/200807

(56) References cited:
- US-A1- 2016 373 405
- US-A1- 2020 167 175
- CHRISTIAN TOCHE ETSI NFV ISG OPNFV 3GPP SA5 TM FORUM: "3GPP SA5 status on NFV", vol. SA WG5, no. Prague ;20150227, 27 February 2015 (2015-02-27), XP051684200, Retrieved from the Internet <URL:http://www.3gpp.org/ftp/tsg%5Fsa/WG5%5FTM/TSGS5%5F99/SA%2367%20input/SP%2D150072%2Ezip> [retrieved on 20150227]

## Description

### TECHNICAL FIELD

The following discussion generally relates to computer security, and in particular to regulating IP-based access to information technology services.

### BACKGROUND

Wireless networks that transport digital data and telephone calls are becoming increasingly sophisticated. Currently, fifth generation ("5G") broadband cellular networks are being deployed around the world. These 5G networks use emerging technologies to support data and voice communications with millions, if not billions, of mobile phones, computers and other devices. 5G technologies are capable of supplying much greater bandwidths than was previously available, so it is likely that the widespread deployment of 5G networks could radically expand the number of services available to customers. This expansion will accompany an increased need for network security.

The principal of least privilege is a security approach in which a user has only the minimum level of access required to function in their role. Applying least privilege access tends to restrict users from accessing or modifying data when they should not. Least privilege can be difficult to apply when user groups grow and shrink regularly, or when users come on and off the system regularly. Examples of organizations that might struggle to implement least privilege include large organizations with high levels of frictional turnover, organizations that scale user groups up and down in size, organizations that dynamically access user accounts, or organizations that manually apply access controls.

Cloud service providers, for example, offer security suites that can assist some users in applying least privilege under ideal conditions. AWS^{®}, for example, has tools that can sometimes be used to enforce least privilege. However, existing tools may be insufficient for users with complex environments using atypical networking techniques such as cloud-based 5G telephone networks. For example, the use of non-native traffic routing in a cloud environment can mask the true traffic source label, which inhibits the functionality of native tools that rely on true traffic source labels.

Some networks use humans to deploy resources in preplanned and preassigned IP networks. Planning affords some level of coordination within and between various deployments to establish specific IP blocks as being allowed for communication in an IP-filtered environment. Security groups can similarly be premade with an assumed trust that no foreign infrastructure will live in the network space. To maintain some level least privilege communications, all IP spacing in such deployments are preplanned. Changes to the plan come with updates to impacted deployments, which can generate maintenance work and become unwieldy at scale. Orchestration and parallel environments only amplify problems with coordination between network resources.

US patent application US 2016/373405 describes processes for managing IP addresses that are dynamically assigned may include the ability to determine whether an identifier for a web service has been received from a customer having one or more virtual machines in a service provider network, the web service being accessible by the customer's virtual machines over an external communication network. The processes may also include the ability to determine a number of IP addresses for the web service, identify virtual machines of the customer that are allowed to communicate with the web service, generate one or more IP address lists for the identified virtual machines, and update security tables for the identified virtual machines with the IP address lists at server computers hosting the identified virtual machines.

The document "3GPP SA5 status on NFV", authored by Christian Toche for the ETSI NFV ISG, OPNFV, 3GPP SA5, TM Forum, Joint workshop in Prague on 27^{th} February 2015 describes examples of E2E VNF instantiation flows including VNF instantiation with resources allocated by NFVO.

US patent application US 2020/167175 describes filtering based containerized virtual machine networking. For example, a host has a processor, a memory, and a network interface (NIC), and a hypervisor executes on the host. A container with a filtering module executes on the host with a virtual machine (VM) with a virtual network interface (VNIC) executing on the container. The VNIC receives a message for transmission over a network. The filtering module determines whether an internet protocol (IP) address in the message matches a validation IP address configured in the filtering module. In response to determining that the IP address in the message is invalid, transmission of the message is canceled and the message is sent to a remediation service. In response to determining that the IP address in the message valid, the container forwards the message to the hypervisor, which transmits the message to the network using the IP address via the NIC.

### SUMMARY

Various embodiments support IP-based network security for virtualized network functions in a 5G wireless network. An automated process for implementing internet protocol (IP) based filtering between a first network function and a second network function comprises the steps of initializing a prefix list associated with a first network function, initializing a message queue associated with the first network function, and running a worker to maintain the prefix list. The worker consumes messages from the message queue and edits the prefix list. A notification service associated with a second network function is initialized, and the message queue is subscribed to the notification service. An instance of the second network function is instantiated with an IP address is assigned to the second network function in response to being instantiated. The notification service broadcasts a message including the IP address to message queues subscribed to the notification service. The worker consumes the message including the IP address from the first message queue. The worker updates the prefix list to allow communication between the first network function and the second network function on the IP address.

Various embodiments update the prefix list to allow communication by adding an identifier that includes the IP address to the prefix list. The instance may be terminated in response to a declining load on the first network function. The notification service broadcasts a second message indicating termination of the instance having the IP address to the message queues subscribed to the notification service. The worker consumes the second message indicating termination of the instance having the IP address and, in response, updates the prefix list to block communication between the first network function and the second network function on the IP address. A security control associated with the first network function is initialized and creates rules based on the prefix list. The security control can include a security group.

Embodiments of automated processes for managing internet protocol (IP) communication between a first network function and a second network function include instantiating an instance of the first network function. An IP address may be assigned to the instance in response to being instantiated. A notification service of the first network function broadcasts a message including the IP address to a message queue of a second network function in response to the second network function being subscribed to the notification service. A worker of the second network function consumes the message including the IP address of the instance. The worker updates a prefix list of the second network function to allow communication between the first network function and the second network function on the IP address.

In various embodiments updating the prefix list to allow communication includes adding an identifier that includes the IP address to the prefix list. The instance may be terminated in response to a declining demand for the first network function. The notification service broadcasts a second message indicating termination of the instance having the IP address to the message queues subscribed to the notification service. The worker consumes the second message indicating termination of the instance having the IP address. The worker updates the prefix list to block communication between the first network function and the second network function on the IP address. A security group is associated with the second network function and creates rules based on the prefix list.

Embodiments of a cellular network having virtualized network functions include a first network function supporting communication on the cellular network. The first network function includes a first security control implementing IP-based filtering using a first prefix list, a first message queue configured to receive a scale notification, and a first worker configured to consume the scale notification from the first message queue. The scale notification includes an IP address, and the first worker is configured to modify the first prefix list using the IP address from the scale notification in response to reading the scale notification. A second network function supports communication on the cellular network and includes a notification service configured to send messages to subscribed message queues in response to scaling events. The first message queue is subscribed to the notification service. An instance of the second network function is assigned the IP address in response to being instantiated, and the notification service sends the scale notification to the first message queue in response to the instance being instantiated.

Various embodiments of the second network function include a second security control implementing the IP-based filtering using a second prefix list. The second prefix list identifies IP addresses permitted to communicate with the second network function. A second message queue is configured to receive scale notifications. A second worker is configured to consume the scale notifications from the second message queue. The second worker is configured to modify the second prefix list in response to reading the scale notifications. The first prefix list identifies IP addresses permitted to communicate with the first network function. The first network function further comprises a load balancer configured to allow network communications from IP addresses on the first prefix list. The first network function further comprises a load balancer configured to block network communications from IP addresses not on the first prefix list.

In some embodiments, a third network function includes a second security control implementing the IP-based filtering using a second prefix list, a second message queue subscribed to the notification service of the second network function, and a second worker configured to consume the scale notification from the second message queue. The second message queue is configured to receive the scale notification including the IP address. The second worker is configured to modify the second prefix list using the IP address from the scale notification in response to reading the scale notification. The notification service of the second network function sends the scale notification to the first network function and the third network function in response to the first message queue and the second message queue being subscribed to the notification service. A load balancer is configured to implement least privilege access based on the first prefix list. The load balancer forwards a communication having a masked IP address based on the first prefix list.

### BRIEF DESCRIPTION OF THE DRAWINGS

The subject matter of the present disclosure is particularly pointed out and distinctly claimed in the concluding portion of the specification. A more complete understanding of the present disclosure, however, may be obtained by referring to the detailed description and claims when considered in connection with the illustrations.
FIG. 1 illustrates an example of a system for implementing a wireless network using virtualized network functions, in accordance with various embodiments.
FIG. 2 illustrates a cloud-based system that dynamically expands and contracts network functions supporting a wireless network using automated IP-based filtering, in accordance with various embodiments.
FIG. 3 illustrates a connectivity map for network functions in a cloud-based system, in accordance with various embodiments.
FIG. 4 illustrates a network map for communication between network functions in a cloud-based system, in accordance with various embodiments.
FIG. 5 illustrates creation of messaging infrastructure for network functions of a cloud-based system, in accordance with various embodiments.
FIG. 6 illustrates subscribing notification services to a message queue in a cloud-based system, in accordance with various embodiments.
FIG. 7 illustrates topics associated with notification services in a cloud-based system, in accordance with various embodiments.
FIG. 8 illustrates use of a prefix list to create rules in a security group granting network access in a cloud-based system, in accordance with various embodiments.
FIG. 9 illustrates TCP communication to a network service in a cloud-based system, in accordance with various embodiments.

### DETAILED DESCRIPTION

The following detailed description is intended to provide several examples that will illustrate the broader concepts that are set forth herein, but it is not intended to limit the invention or the application and uses of the invention. Furthermore, there is no intention to be bound by any theory presented in the preceding background or the following detailed description.

Systems, processes, and devices of the present disclosure tend to maintain least privilege access configurations during automated upscaling and downscaling of network functions in a cloud-based environment such as, for example, a cloud-based 5G wireless network. Internet protocol (IP) based filtering prevents lateral network traversal from unauthorized IP addresses. To overcome masked IP addresses in some networks, network functions are associated with security controls that maintain an IP list to apply filtering. IP-based filtering with automated network expansion and contraction as described herein tends to enforce a high level of security while also maintaining connectivity in a dynamically growing and shrinking network.

As used herein, the term network function may describe a functional building block within a network infrastructure. Network functions typically include well-defined external interfaces and a well-defined functional behavior. Network functions may be implemented in a cloud-based environment using virtualization tools such as, for example, virtual machines or containers. The systems described herein may thus spool up or retire network functions by launching a new instance or killing an existing instance of the network function.

Network functions coming and going offline may communicate on new IP addresses or released IP addresses using broadcast communication to assigned listeners. Listeners are assigned and configured based on a dependency graph establishing which network functions should maintain IP communication channels. Network functions may be associated with security groups or other security controls that maintain a list of IP addresses used to allow communication between dependencies. Network functions expanding and contracting as described herein can update security controls in real time or near-real time without the need for manual IP planning for each new instance.

Systems of the present disclosure may use a series of events, messages, queues, and processors to support horizontally scaling and parallel-processing capabilities. The multiple queue and topic design results in latency reduction and load distribution with a centralized queue to perform message parsing, lookup, and adjustment across potentially hundreds of groups at any moment. The multiple queue and topic design also simplifies association mapping, as the mapping is built into the topic and queue relationships without storing the relationship into a database table that is constantly under load for queries.

IP prefix lists are used as a source for filtering with near real-time updates to prefix lists associated with particular network functions. Network functions are deployed with one or more prefix lists based on communication need, a messaging queue for receiving work to updates for the prefix list, a maintenance worker, and a notification service. In response to a change in IP scope resulting from expansion or contraction of a network function, the listening network functions are alerted. In response to detecting an event, a message is transmitted by the network function's notification service. Listener queues subscribed to the upstream network function receive the change notification and invoke the maintenance worker to update the prefix list based on the message. The invoked process digests the message and adjusts the prefix list for the listening load balancer or other routing infrastructure, resulting in adding or removing permitted traffic routes.

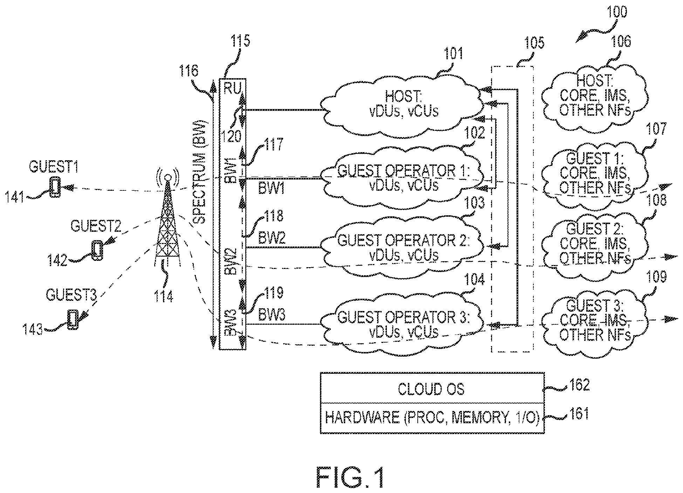

With reference now to FIG. 1, an example cellular communication system 100 is shown, in accordance with various embodiments. Cellular communication system 100 includes a host operator maintaining ownership of one or more radio units (RUs) 115 associated with a wireless network cell. The example of FIG. 1 depicts a host operator operating a "radio/spectrum as a service (R/SaaS)" that allocates bandwidth on its own radio units for use by one or more guest network operators, though the systems, methods, and devices described herein could be applied to any wireless network using virtualized network services. Examples of guest network operators may include internal brands of the host operator, system integrators, enterprises, external MVNOs, or converged operators. The host and the guest network operators may maintain desired network services to support user equipment (UE) 141, 142, 143.

In the example of FIG. 1, each RU 115 communicates with UE 141, 142, 143 operating within a geographic area using one or more antennas 114 (also referred to herein as towers) capable of transmitting and receiving messages within an assigned spectrum 116 of electromagnetic bandwidth. In various embodiments, guest networks 102, 103, 104 interact with a provisioning plane 105 to obtain desired spectrum (e.g., portions of bandwidth 117, 118, 119 respectively) across one or more of the RUs 115 operated by the host 101. Provisioning plane 105 allows guest network operators to obtain or change their assigned bandwidths on different RUs 115 on an on-demand and dynamic basis. Network services 107, 108, 109 may be maintained by guest operators and network services 106 may be maintained by host 101. Network services may be scaled up and down in response to network load, and communication with network services may be managed as described herein.

The Open RAN standard breaks communications into three main domains: the radio unit (RU) that handles radio frequency (RF) and lower physical layer functions of the radio protocol stack, including beamforming; the distributed unit (DU) that handles higher physical access layer, media access (MAC) layer and radio link control (RLC) functions; and the centralized unit (CU) that performs higher level functions, including quality of service (QoS) routing and the like. The CU also supports packet data convergence protocol (PDCP), service data adaptation protocol (SDAP) and radio resource controller (RRC) functions. The RU, DU and CU functions are described in more detail in the Open RAN standards, as updated from time to time, and may be modified as desired to implement the various functions and features described herein. In the example of FIG. 1, host 101 maintains one or more DUs and CUs (i.e., network functions) as part of its own network. The DU communicates with one or more RUs 115, as specified in the Open RAN standard.

The various network components shown in FIG. 1 are typically implemented using software or firmware instructions that are stored in a non-transitory data storage (e.g., a disk drive or solid-state memory) for execution by one or more processors. The various components shown in FIG. 1 can be implemented using cloud-based hardware 161 and an appropriate operating system 162 such as the Amazon Web Service (AWS) platform offered by Amazon Inc., although other embodiments could use other cloud platforms or any type of conventional physical computing hardware 161, as desired.

As illustrated in the example of FIG. 1, system 100 includes a host network 101 and one or more guest networks 102, 103, 104. The host network 101 is typically operated by an organization that owns radio equipment and sufficient spectrum (potentially on different bands) to offer 5G capacity and coverage. Host network 101 provides 5G service to connected UEs, and it manages network services available to its own UEs or those of its guest operators. Host network 101 includes at least one DU and at least one CU, both of which will typically be implemented as virtual network functions using cloud resources.

Guest networks 102, 103, 104 operated by guest operators can manage their own networks using allocated portions of the bandwidth 117, 118, 119 handled by one or more of the RUs 115 associated with the host 101. The guest networks 102, 103, 104 communicate with one or more UEs 141-143 using allocated bandwidth 117, 118, 119 on the host's RU 115. Guest networks 102, 103, 104 may include one or more virtual DUs and CUs, as well as other network services 106, 107, 108, 109, as desired. Generally, one or more guest operators will instantiate its own 5G virtualized network functions (e.g., CMS, vCUs, vDUs, etc.) using cloud-based resources, as noted above. However, various embodiments may operate outside of cloud-based environments. Host network 101 may also generate its own network services to manage software and services available to UE 141-143.

Guest operators may lease or otherwise obtain any needed 5G access for its planned services, capacity and coverage based on an arrangement with the host provider. A guest provider may then operate and manage its own 5G network 102, 103, 104 independently of the host 101 and the other guests. A network operator can optimize its own network by implementing its own cloud-based network services.

Each RU 115 is typically associated with a different wireless cell that provides wireless data communications to user devices 141-143. RUs 115 may be implemented with radios, filters, amplifiers and other telecommunications hardware to transmit digital data streams via one or more antennas 114. Generally, RU hardware includes one or more processors, non-transitory data storage (e.g., a hard drive or solid state memory) and appropriate interfaces to perform the various functions described herein. RUs are physically located on-site with the transmitter/antenna 114, as appropriate. Conventional 5G networks may make use of any number of wireless cells spread across any geographic area, each with its own on-site RU 115.

RUs 115 support wireless communications with any number of user devices 141-143. UE 141-143 are often mobile phones or other portable devices that can move between different cells associated with the different RUs 115, although 5G networks are also widely expected to support home and office computing, industrial computing, robotics, Internet-of-Things (IoT) and many other devices. While the example illustrated in FIG. 1 shows one RU 115 for convenience, a practical implementation will typically have any number of virtualized RUs 115 that can each be individually configured to provide highly configurable geographic coverage for a host or guest network, if desired. Host 101 and guest operators 102, 103, 104 can automatically scale and manage network services with least privileged access using the techniques described herein.

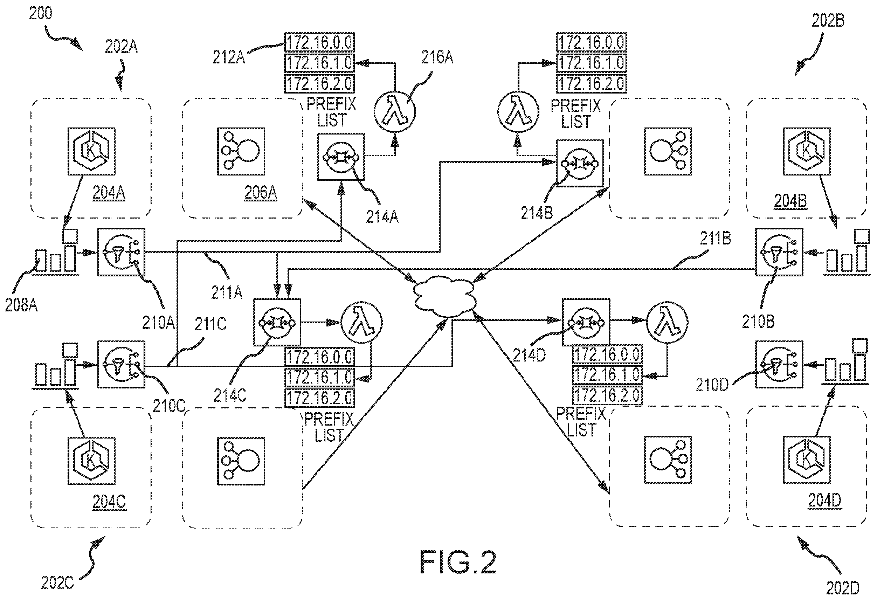

With reference to FIG. 2, an example system 200 is shown for implementing least privilege access between network functions in a cloud environment. System 200 supports various network functions 202A, 202B, 202C, and 202D. Although four network functions are depicted in system 200, any number of network functions can be accommodated using the techniques described herein. Network functions may be cloud-based applications that fulfil a role in a 5G wireless network. For example, network functions may communicate with handsets to deliver, receive, route, or transport telephone calls, text messages, or data. Network functions scale up based on increased load and scale down based on decreased load by increasing or pruning the number of instances running to support the network function.

In various embodiments, each network function 202A, 202B, 202C, and 202D has one or more instances 204. Instances 204 may be containers, pods, virtual machines, computing nodes, or other computing resources capable of fulfilling a computing task on system 200. Each instance 204 can be behind a load balancer 208 to control scaling up and down in response to load demand. Each network function 202A, 202B, 202C, and 202D is associated with a security control 206. Security control 206 may be a security group on AWS, for example.

Embodiments of security control 206 may use an associated prefix list 212 to implement IP-based filtering for its network function. A prefix list 212 comprises a list of allowed IP addresses associated with instances 204 of network functions 202A, 202B, 202C, or 202D. Prefix lists 212 may thus be whitelists of IP addresses and subnets allowed for communication in some embodiments. Prefix lists 212 allow system 200 to enforce IP-based network restrictions to communications having masked or otherwise unavailable IP addresses for originating devices.

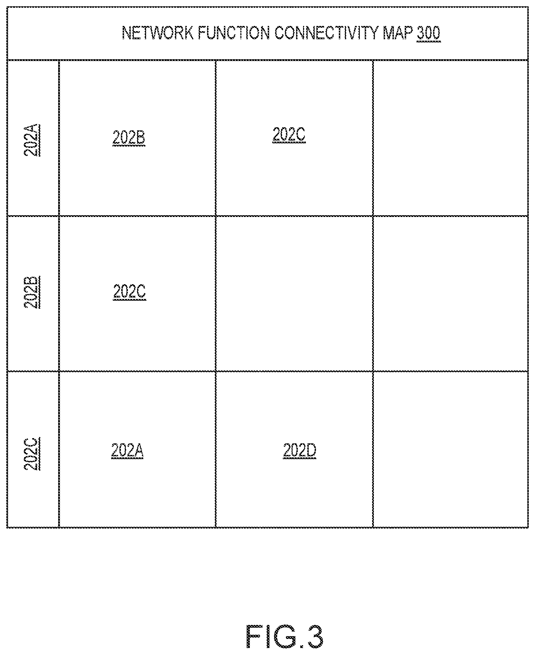

Referring briefly to the example connectivity map 300 of FIG. 3 with continuing reference to FIG. 2, network function 202A has network functions 202B and 202C according to connectivity map 300. Prefix list 212 of network function 202A thus includes IP addresses of all instances of network function 202B and network function 202C. Continuing the example, prefix list 212 associated with network function 202B contains all IP addresses for instances of network function 103, and prefix list 212 of network function 202C includes IP addresses of all instances of network function 202A and network function 202D.

Prefix list 212 may receive updates as new instances 204 are created or deleted in response to load demands or for any other reason. Worker 216 may be a service, process, script, program, or other executable suitable for reading a queue and updating prefix list 212. In the example system 200, worker 216 is a lambda computing service hosted by AWS. Worker 216 associated with network function 202A maintains prefix list 212 using messaging techniques to add or remove IP addresses in response to changes in monitored network functions 202B and 202C.

In various embodiments, a message bus enables communication between network functions in real time. Each network function 202A, 202B, 202C, and 202D is associated with a message queue 214 to receive updates and with a notification service 210 to push updates. In the example AWS-based implementation of FIG. 2, the notification services 210 may be simple notification services (SNS), and message queues 214 may be simple queue services (SQS). Notification services 210 may be in communication with or monitoring the associated load balancer 208 or instances 204 to determine when an instance 204 is coming online with a new IP address or going offline with an IP address for deletion.

The message queues 214 associated with network functions are subscribed to notification services 210 of other network functions to monitor for changes. Messaging communication may be one-way in that message queues 214 in some embodiments are configured only to receive messages from notification services 210 to which they subscribe. In the AWS-based example of FIG. 2, SNS topics may be used to decouple notification services 210 from subscribers, though other messaging services and security tools may be used in various embodiments. By subscribing message queues 214 only to the notification services 210 for required dependencies, tight control over prefix lists 212 is maintained. Prefix lists 212 maintained by workers 216 enable enforcement of least privilege access on system 200.

In the exemplary system 200, message queue 214B associated with network function 202B and message queue 214C associated with network function 202C both have subscriptions 211A to notification service 210A associated with network function 202A. Message queue 214C associated with network function 202C has a subscription 211B to notification service 210B associated with network function 202B. Message queue 214A associated with network function 202A and message queue 214D associated with network function 202D both have subscriptions 211C to notification service 210C associated with network function 202C. Notification service 210D associated with network function 202D has no subscribers.

Various embodiments of notification services 210 supporting a network function 202 may send messages to subscribed message queues 214 in response to instances 204 coming online or instances 204 going offline in the network function. The messages may include an IP address, subnet, range of addresses, or description of IP addresses approved for communication. The messages may also include an indication whether the IP addresses are being added or removed from service.

In the example system 200 of FIG. 2, message queue 214A receives messages indicating that worker 216A should modify prefix list 212A by adding or removing IP addresses for network function 202C. Worker 216A consumes messages from message queue 214A and updates prefix list 212A to implement the changes contained in each message. Continuing the example, message queue 214B receives messages indicating that worker 216B should modify prefix list 212B by adding or removing IP addresses for network function 202A. Message queue 214C receives messages indicating that worker 216C should modify prefix list 212C by adding or removing IP addresses for network functions 202A and 202D.

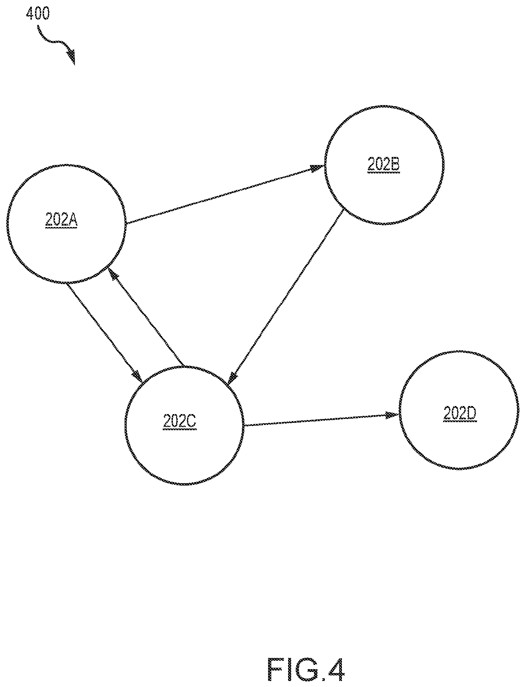

Various embodiments depicted in FIGs. 4-9 illustrate creation of system 200 of FIG. 2 to implement a wireless network such as cellular communication system 100 of FIG. 1. Referring now to FIG. 4, network map 400 is shown. Circles represent network services 202, and the arrows point in the direction messages are sent. In that regard, arrows point to network functions 202 associated with the subscribing message queue 214. The arrows also point away from the network function associated with the notification service 210 sending a message to subscribers.

Various embodiments of the example system 200 in FIG. 2 implement the network map 400 of FIG. 4. Network function 202A sends a message from its notification service to the message queues of network function 202B and network function 202A, and network function 202C sends a message from its notification service to the message queue of network function 202A. Network function 202D receives a message in its message queue from the notification service of network function 202C. In that regard, system 200 of FIG. 2 tends to implement access illustrated in a network map 400 using the principal of least privilege access.

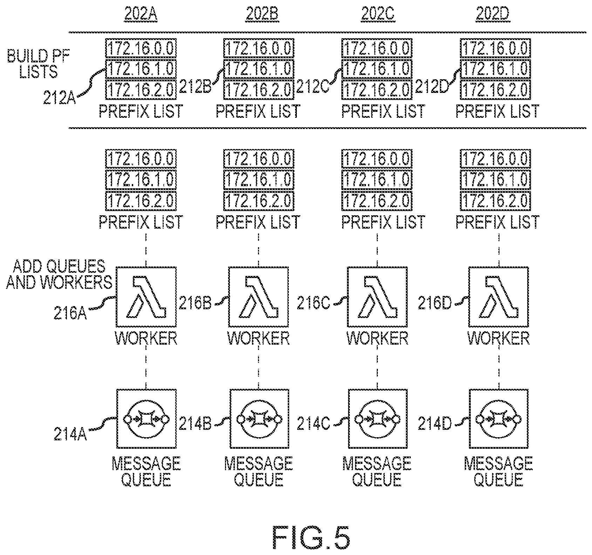

To highlight the build relationship, FIGs. 5-9 show an example build in AWS with initialization steps for network functions 202, though other embodiments could be built on other cloud services or hardware. Referring to FIG. 5, the process of initializing system 200 may include building the queueing mechanisms. Prefix lists 212 may be formed empty, without IP addresses, and may be populated in response to system 200 coming online and creating instances 204. Prefix lists 212 may also be prepopulated with an initial list of IP addresses in some embodiments. Workers 216 may be created and associated with a network function 202 and a prefix list 212. Each worker 216 may also be associated with a messaging queue for its respective network function 202.

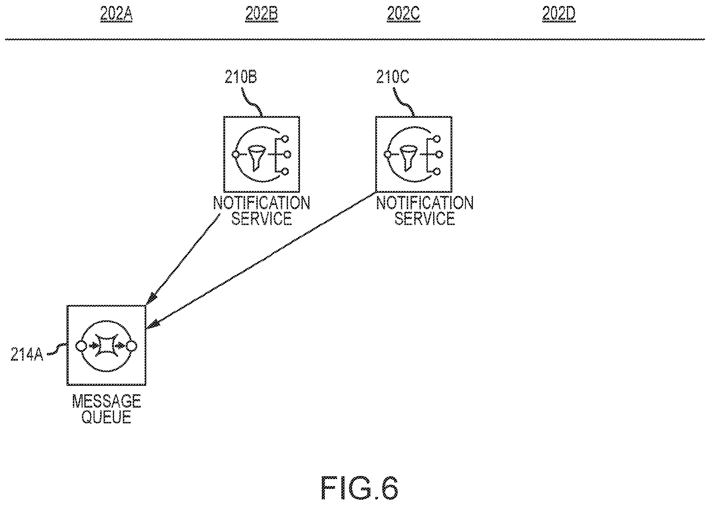

The process of initializing system 200 may also include subscribing message queues 214 to notification services 210B, as shown in the example of FIG. 6. The example FIG. 6 illustrates subscriptions 211 by message queue 214A of network function 202A to notification service 210B and notification service 210C. The example of FIG. 6 depicts implementation of a portion of network map 400 from FIG. 6, though subscriptions would be created to implement most communications depicted in network map 400 of FIG. 4 in building the architecture of system 200 of FIG. 2. Since network map 400 shows network function 202A communicating with network functions 202B and 202C, message queue 214A of network function 202A is subscribed to notification services 210B and 210C associated with network functions 202B and 202C, respectively.

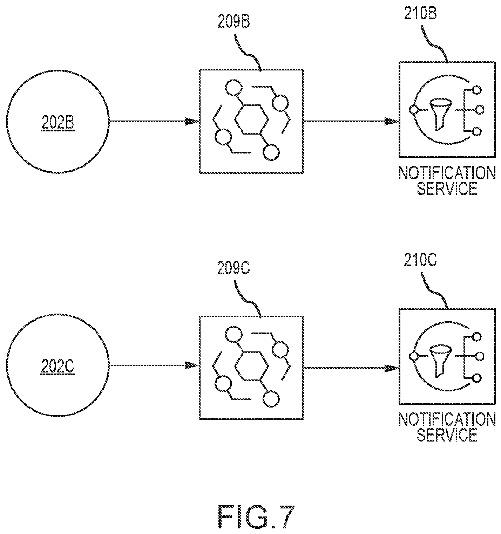

The process of initializing system 200 may also include creating topics for notification services, as shown in FIG. 7. When the initialization phase is completed, network functions can be deployed. Using stored identifiers for topics 209, the relationship between the infrastructure and the notification topics can be established, for example, using EventBridge to handle the linking. Establishment of the relationships may happen during the execution of the Continuous Integration and Continuous Delivery (CI/CD) pipeline for the deployment of the infrastructure that will be sending the messages. Topics 209 may enable notification services 210 to send messages to large numbers of subscriber systems. This step may enable the messaging flow used to generate and update the prefix list for network function 202A. The prefix list for network function 1 is being managed regardless of whether or not network function 202A has been deployed. Upon deployment of network function 202A, the CI/CD pipeline will generate a security control 206 and adopt prefix list 212 for rule generation. After the messaging components are established, the worker 216A for network function 202A uses updates from network functions 202B and 202C to manage the security control 206 (e.g., a security group) and keep prefix list 212A current in response to network functions 202B and 202C scaling up and down.

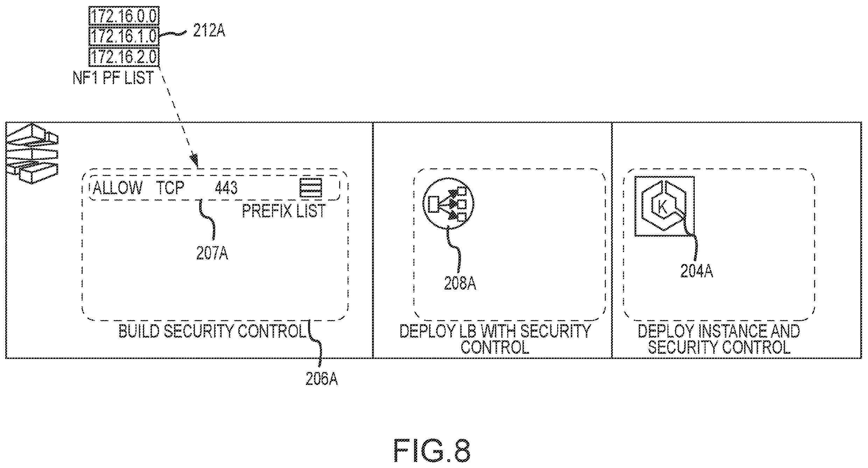

With reference to FIG. 8, security control 206A is created and pointed to prefix list 212A. Security control 206 may use prefix list 212A to implement a security group rule 207A with entries indicating allowed or disallowed communications. Rules are added to security control 206 (e.g., a security group in AWS) and prefix list 212A is updated as worker 216A receives messages indicating network functions 202B and 202C are bring additional instances online. Rules are removed from prefix list 212A as worker 216A as upstream service scaling collapses. Prefix list 212A of network function 202A is thus a dynamic list that changes in response to the state of instances 204 of network function 202B and network function 202C.

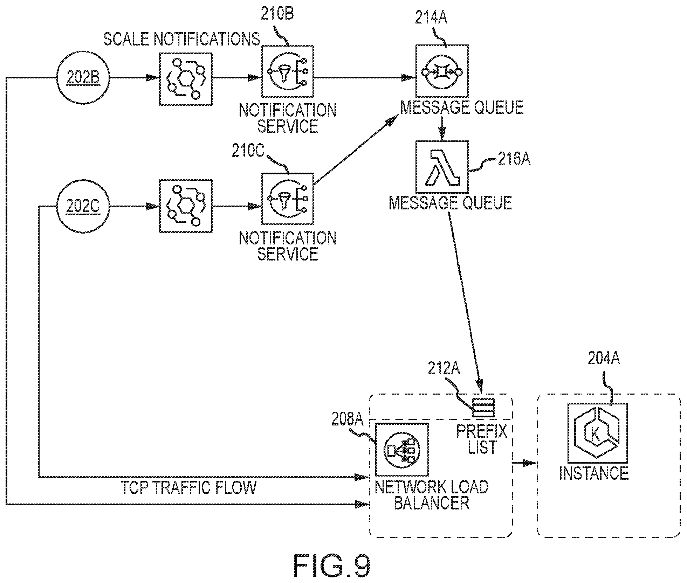

Referring now to FIG. 9, TCP communication is shown by network functions 202B and 202C with instance 204A through load balancer 208A. Depicted communications may be enabled using least privilege security techniques, in accordance with various embodiments. Network functions 202B and 202C generate scale notifications for transmission by notification services 210B and 210C, respectively. The notification services send scale notifications to subscribed message queues, which include message queue 214A in the depicted example. Worker 216A reads message queue 214A for pending scale notifications and takes action by updating prefix list 212A in response to the scale notification.

In various embodiments, scale notifications may include an IP address, IP subnet, or IP range and an indication whether to add or remove the indicated IPs depending on whether the associated instances are coming into service or being retired. Worker 216A may modify prefix list 212A by adding or removing IP addresses in accordance with scale notification. Load balancer 208A may control routing of inbound and outbound traffic based on the prefix list. Load balancer 208A may allow communications to or from IP addresses on the prefix list 212A. Load balancer 208A may discard or block communications to or from IP addresses absent from prefix list 212A. TCP traffic, UDP traffic, IP traffic, or traffic using any routable communication protocol may be controlled using prefix list 212A. Load balancer 208 allows traffic to pass from network function 202B and network function 202C to instance 204A in response to prefix list 212A being updated.

Systems, methods, and devices described herein tend to implement least restrictive access for IP communications on cloud-based 5G networks. The messaging system used to transfer scale notifications can maintain accurate prefix lists, which enables restrictive IP-based network limits regardless of whether IP addresses are stripped or masked in network communications.

Benefits, other advantages, and solutions to problems have been described herein with regard to specific embodiments. Furthermore, the connecting lines shown in the various figures contained herein are intended to represent exemplary functional relationships or couplings between the various elements. It should be noted that many alternative or additional functional relationships or connections may be present in a practical system. However, the benefits, advantages, solutions to problems, and any elements that may cause any benefit, advantage, or solution to occur or become more pronounced are not to be construed as critical, required, or essential features or elements of the inventions.

The scope of the invention is accordingly to be limited by nothing other than the appended claims, in which reference to an element in the singular is not intended to mean "one and only one" unless explicitly so stated, but rather "one or more." Moreover, where a phrase similar to "A, B, or C" is used herein, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or device that comprises a list of elements does not include only those elements but may include other elements not expressly listed or inherent to such process, method, article, or device.

The term "exemplary" is used herein to represent one example, instance, or illustration that may have any number of alternates. Any implementation described herein as "exemplary" should not necessarily be construed as preferred or advantageous over other implementations. While several exemplary embodiments have been presented in the foregoing detailed description, it should be appreciated that a vast number of alternate but equivalent variations exist, and the examples presented herein are not intended to limit the scope, applicability, or configuration of the invention in any way. To the contrary, various changes may be made in the function and arrangement of the various features described herein without departing from the scope of the claims.

## Claims

1. An automated process for implementing internet protocol (IP) based filtering between a first network function and a second network function, comprising:
initializing a prefix list (212) associated with the first network function;
initializing a message queue (214) associated with the first network function;
running a worker (216) to maintain the prefix list, wherein the worker consumes messages from the message queue and edits the prefix list;
initializing a notification service (210) associated with the second network function, wherein the message queue (214) is subscribed to the notification service (210);
instantiating an instance of the second network function, wherein an IP address is assigned to the second network function in response to being instantiated;
broadcasting, by the notification service (210), a message including the IP address to message queues subscribed to the notification service;
consuming, by the worker (216) and from the message queue (214), the message including the IP address; and
updating, by the worker (216) and in response to the message, the prefix list to allow communication between the first network function and the second network function on the IP address.

2. The automated process of claim 1, wherein updating the prefix list (212) to allow communication includes adding an identifier that includes the IP address to the prefix list.

3. The automated process of claim 1, further comprising terminating the instance in response to a declining load on the first network function.

4. The automated process of claim 3, further comprising broadcasting, by the notification service, a second message indicating termination of the instance having the IP address to the message queues (214) subscribed to the notification service (210).

5. The automated process of claim 4, further comprising:
consuming, by the worker (216) and from the message queue (214), the second message indicating termination of the instance having the IP address; and
updating, by the worker (216) and in response to consuming the message, the prefix list (212) to block communication between the first network function and the second network function on the IP address.

6. The automated process of claim 4, further comprising initializing a security control associated with the first network function, wherein the security control creates rules based on the prefix list.

7. The automated process of claim 6, wherein the security control comprises a security group.

8. A cellular network having virtualized network functions, the cellular network comprising:
a first network function (202A) supporting communication on the cellular network, the first network function including:
a first security control (206A) implementing IP-based filtering using a first prefix list (212A);
a first message queue (214A) configured to receive a scale notification, wherein the scale notification includes an IP address;
a first worker (216A) configured to consume the scale notification from the first message queue (214A), wherein the first worker is configured to modify the first prefix list using the IP address from the scale notification in response to reading the scale notification;
a second network function (202B) supporting communication on the cellular network, the second network function including:
a notification service (210B) configured to send messages to subscribed message queues in response to scaling events, wherein the first message queue (214A) is subscribed to the notification service; and
an instance of the second network function, wherein the instance is assigned the IP address in response to being instantiated, wherein the notification service sends the scale notification to the first message queue (214A) in response to the instance being instantiated.

9. The cellular network of claim 8, wherein the second network function further comprises:
a second security control implementing the IP-based filtering using a second prefix list, wherein the second prefix list identifies IP addresses permitted to communicate with the second network function;
a second message queue configured to receive scale notifications; and
a second worker configured to consume the scale notifications from the second message queue, wherein the second worker is configured to modify the second prefix list in response to reading the scale notifications.

10. The cellular network of claim 8, wherein the first prefix list identifies IP addresses permitted to communicate with the first network function (202A).

11. The cellular network of claim 8, wherein the first network function (202A) further comprises a load balancer (208A) configured to allow network communications from IP addresses on the first prefix list.

12. The cellular network of claim 8, wherein the first network function further comprises a load balancer (208A) configured to block network communications from IP addresses not on the first prefix list.

13. The cellular network of claim 12, further comprising a third network function including:
a second security control implementing the IP-based filtering using a second prefix list;
a second message queue subscribed to the notification service of the second network function, wherein the second message queue is configured to receive the scale notification including the IP address; and
a second worker configured to consume the scale notification from the second message queue, wherein the second worker is configured to modify the second prefix list using the IP address from the scale notification in response to reading the scale notification.

14. The cellular network of claim 13, wherein the notification service of the second network function sends the scale notification to the first network function and the third network function in response to the first message queue and the second message queue being subscribed to the notification service.

15. The cellular network of claim 8, further comprising a load balancer (208A) configured to implement least privilege access based on the first prefix list, wherein the load balancer forwards a communication having a masked IP address based on the first prefix list.

## Patentansprüche

1. Automatisierter Prozess zur Implementierung von Internetprotokoll-gestütztem Filtern zwischen einer ersten Netzwerkfunktion und einer zweiten Netzwerkfunktion, der Folgendes beinhaltet:
Initialisieren einer mit der ersten Netzwerkfunktion verbundenen Präfixliste (212);
Initialisieren einer mit der ersten Netzwerkfunktion verbundenen Nachrichtenwarteschlange (214);
Ausführen eines Workers (216) zum Verwalten der Präfixliste, wobei der Worker Nachrichten aus der Nachrichtenwarteschlange verbraucht und die Präfixliste bearbeitet;
Initialisieren eines mit der zweiten Netzwerkfunktion verbundenen Benachrichtigungsdienstes (210), wobei die Nachrichtenwarteschlange (214) Teilnehmer des Benachrichtigungsdienstes (210) ist;
Instanziieren einer Instanz der zweiten Netzwerkfunktion, wobei der zweiten Netzwerkfunktion als Reaktion auf die Instanziierung eine IP-Adresse zugewiesen wird;
Senden einer Nachricht, die die IP-Adresse enthält, als Broadcast durch den Benachrichtigungsdienst (210) an Nachrichtenwarteschlangen, die Teilnehmer des Benachrichtigungsdienstes sind;
Verbrauchen der Nachricht, die die IP-Adresse enthält, durch den Worker (216) und aus der Nachrichtenwarteschlange (214); und
Aktualisieren der Präfixliste durch den Worker (216) und als Reaktion auf die Nachricht zum Ermöglichen der Kommunikation zwischen der ersten Netzwerkfunktion und der zweiten Netzwerkfunktion über die IP-Adresse.

2. Automatisierter Prozess nach Anspruch 1, wobei das Aktualisieren der Präfixliste (212) zum Ermöglichen der Kommunikation das Hinzufügen einer Kennung, die die IP-Adresse enthält, zu der Präfixliste beinhaltet.

3. Automatisierter Prozess nach Anspruch 1, der ferner das Beenden der Instanz als Reaktion auf eine abnehmende Belastung der ersten Netzwerkfunktion beinhaltet.

4. Automatisierter Prozess nach Anspruch 3, der ferner das Senden einer zweiten Nachricht, die die Beendigung der Instanz mit der IP-Adresse anzeigt, als Broadcast an die Nachrichtenwarteschlangen (214), die Teilnehmer des Benachrichtigungsdienstes (210) sind, durch den Benachrichtigungsdienst beinhaltet.

5. Automatisierter Prozess nach Anspruch 4, der ferner Folgendes beinhaltet:
Verbrauchen der zweiten Nachricht, die die Beendigung der Instanz mit der IP-Adresse anzeigt, durch den Worker (216) und aus der Nachrichtenwarteschlange (214); und
Aktualisieren der Präfixliste (212) durch den Worker (216) und als Reaktion auf das Verbrauchen der Nachricht, um die Kommunikation zwischen der ersten Netzwerkfunktion und der zweiten Netzwerkfunktion über die IP-Adresse zu blockieren.

6. Automatisierter Prozess nach Anspruch 4, der ferner das Initialisieren einer mit der ersten Netzwerkfunktion verbundenen Sicherheitskontrolle beinhaltet, wobei die Sicherheitskontrolle Regeln auf Basis der Präfixliste erstellt.

7. Automatisierter Prozess nach Anspruch 6, wobei die Sicherheitskontrolle eine Sicherheitsgruppe beinhaltet.

8. Mobilfunknetz mit virtualisierten Netzwerkfunktionen, wobei das Mobilfunknetz Folgendes beinhaltet:
eine erste Netzwerkfunktion (202A), die Kommunikation auf dem Mobilfunknetz unterstützt, wobei die erste Netzwerkfunktion Folgendes aufweist:
eine erste Sicherheitskontrolle (206A), die IP-gestütztes Filtern unter Verwendung einer ersten Präfixliste (212A) implementiert;
eine erste Nachrichtenwarteschlange (214A), die zum Empfangen einer Skalierungsbenachrichtigung konfiguriert ist, wobei die Skalierungsbenachrichtigung eine IP-Adresse enthält;
einen ersten Worker (216A), wobei der erste Worker zum Verbrauchen der Skalierungsbenachrichtigung aus der ersten Nachrichtenwarteschlange (214A) konfiguriert ist, wobei der erste Worker zum Modifizieren der ersten Präfixliste unter Verwendung der IP-Adresse aus der Skalierungsbenachrichtigung als Reaktion auf das Lesen der Skalierungsbenachrichtigung konfiguriert ist;
eine zweite Netzwerkfunktion (202B), die Kommunikation auf dem Mobilfunknetz unterstützt, wobei die zweite Netzwerkfunktion Folgendes aufweist:
einen Benachrichtigungsdienst (210B), der zum Senden von Nachrichten an teilnehmende Nachrichtenwarteschlangen als Reaktion auf Skalierungsereignisse konfiguriert ist, wobei die erste Nachrichtenwarteschlange (214A) an dem Benachrichtigungsdienst teilnimmt; und
eine Instanz der zweiten Netzwerkfunktion, wobei der Instanz die IP-Adresse als Reaktion auf ihre Instantiierung zugewiesen wird, wobei der Benachrichtigungsdienst die Skalierungsbenachrichtigung als Reaktion auf die Instantiierung der Instanz an die erste Nachrichtenwarteschlange (214A) sendet.

9. Mobilfunknetz nach Anspruch 8, wobei die zweite Netzwerkfunktion ferner Folgendes beinhaltet:
eine zweite Sicherheitskontrolle, die das IP-gestützte Filtern unter Verwendung einer zweiten Präfixliste (212A) implementiert, wobei die zweite Präfixliste IP-Adressen bezeichnet, die zum Kommunizieren mit der zweiten Netzwerkfunktion berechtigt sind;
eine zweite Nachrichtenwarteschlange, die zum Empfangen von Skalierungsbenachrichtigungen konfiguriert ist; und
einen zweiten Worker, der zum Verbrauchen der Skalierungsbenachrichtigungen aus der zweiten Nachrichtenwarteschlange konfiguriert ist, wobei der zweite Worker zum Modifizieren der zweiten Präfixliste als Reaktion auf das Lesen der Skalierungsbenachrichtigungen konfiguriert ist.

10. Mobilfunknetz nach Anspruch 8, wobei die erste Präfixliste IP-Adressen bezeichnet, die zum Kommunizieren mit der ersten Netzwerkfunktion (202A) berechtigt sind.

11. Mobilfunknetz nach Anspruch 8, wobei die erste Netzwerkfunktion (202A) ferner einen Lastverteiler (208A) beinhaltet, der zum Ermöglichen von Netzkommunikationen von IP-Adressen auf der ersten Präfixliste konfiguriert ist.

12. Mobilfunknetz nach Anspruch 8, wobei die erste Netzwerkfunktion ferner einen Lastverteiler (208A) beinhaltet, der zum Blockieren von Netzkommunikationen von nicht auf der ersten Präfixliste befindlichen IP-Adressen konfiguriert ist.

13. Mobilfunknetz nach Anspruch 12, das ferner eine dritte Netzwerkfunktion beinhaltet, die Folgendes aufweist:
eine zweite Sicherheitskontrolle, die das IP-gestützte Filtern unter Verwendung einer zweiten Präfixliste implementiert;
eine zweite Nachrichtenwarteschlange, die Teilnehmer des Benachrichtigungsdienstes der zweiten Netzwerkfunktion ist, wobei die zweite Nachrichtenwarteschlange zum Empfangen der Skalierungsbenachrichtigung, die die IP-Adresse enthält, konfiguriert ist; und
einen zweiten Worker, der zum Verbrauchen der Skalierungsbenachrichtigung aus der zweiten Nachrichtenwarteschlange konfiguriert ist, wobei der zweite Worker zum Modifizieren der zweiten Präfixliste unter Verwendung der IP-Adresse aus der Skalierungsbenachrichtigung als Reaktion auf das Lesen der Skalierungsbenachrichtigung konfiguriert ist.

14. Mobilfunknetz nach Anspruch 13, wobei der Benachrichtigungsdienst der zweiten Netzwerkfunktion die Skalierungsbenachrichtigung als Reaktion darauf, dass die erste Nachrichtenwarteschlange und die zweite Nachrichtenwarteschlange Teilnehmer des Benachrichtigungsdienstes sind, an die erste Netzwerkfunktion und die dritte Netzwerkfunktion sendet.

15. Mobilfunknetz nach Anspruch 8, das ferner einen Lastverteiler (208A) beinhaltet, der zum Implementieren von Zugang mit geringsten Rechten auf Basis der ersten Präfixliste konfiguriert ist, wobei der Lastverteiler eine Kommunikation mit einer maskierten IP-Adresse auf Basis der ersten Präfixliste weiterleitet.

## Revendications

1. Procédé automatisé pour mettre en œuvre un filtrage basé sur protocole Internet (IP) entre une première fonction réseau et une deuxième fonction réseau, comprenant :
initialiser une liste de préfixes (212) associée à la première fonction réseau ;
initialiser une file d'attente de messages (214) associée à la première fonction réseau ;
exécuter un processus de traitement (216) pour maintenir la liste de préfixes, dans lequel le processus de traitement consomme des messages de la file d'attente de messages et édite la liste de préfixes ;
initialiser un service de notification (210) associé à la deuxième fonction réseau, dans lequel la file d'attente de messages (214) est abonnée au service de notification (210) ;
instancier une instance de la deuxième fonction réseau, dans lequel une adresse IP est attribuée à la deuxième fonction réseau en réponse au fait d'être instanciée ;
diffuser, par le service de notification (210), un message comprenant l'adresse IP aux files d'attente de messages abonnées au service de notification ;
consommer, par le processus de traitement (216) et de la file d'attente de messages (214), le message comprenant l'adresse IP ; et
mettre à jour, par le processus de traitement (216) et en réponse au message, la liste de préfixes afin de permettre la communication entre la première fonction réseau et la deuxième fonction réseau sur l'adresse IP.

2. Procédé automatisé selon la revendication 1, dans lequel mettre à jour la liste de préfixes (212) pour permettre la communication comprend ajouter un identifiant qui comprend l'adresse IP à la liste de préfixes.

3. Procédé automatisé selon la revendication 1, comprenant en outre terminer l'instance en réponse à une charge en déclin sur la première fonction réseau.

4. Procédé automatisé selon la revendication 3, comprenant en outre diffuser, par le service de notification, un deuxième message indiquant la terminaison de l'instance ayant l'adresse IP aux files d'attente de messages (214) abonnées au service de notification (210).

5. Procédé automatisé selon la revendication 4, comprenant en outre :
consommer, par le processus de traitement (216) et de la file d'attente de messages (214), le deuxième message indiquant la terminaison de l'instance ayant l'adresse IP ; et
mettre à jour, par le processus de traitement (216) et en réponse à la consommation du message, la liste de préfixes (212) pour bloquer la communication entre la première fonction réseau et la deuxième fonction réseau sur l'adresse IP.

6. Procédé automatisé selon la revendication 4, comprenant en outre initialiser un contrôle de sécurité associé à la première fonction réseau, dans lequel le contrôle de sécurité crée des règles basées sur la liste de préfixes.

7. Procédé automatisé selon la revendication 6, dans lequel le contrôle de sécurité comprend un groupe de sécurité.

8. Réseau cellulaire ayant des fonctions réseau virtualisées, le réseau cellulaire comprenant :
une première fonction réseau (202A) prenant en charge la communication sur le réseau cellulaire, la première fonction réseau comprenant :
un premier contrôle de sécurité (206A) appliquant un filtrage basé IP en utilisant une liste de préfixes (212A) ;
une première file d'attente de messages (214A) configurée pour recevoir une notification de mise à l'échelle, dans lequel la notification de mise à l'échelle comprend une adresse IP ;
un premier processus de traitement (216A) configuré pour consommer la notification de mise à l'échelle de la première file d'attente de messages (214A), dans lequel le premier processus de traitement est configuré pour modifier la première liste de préfixes en utilisant l'adresse IP de la notification de mise à l'échelle en réponse à la lecture de la notification de mise à l'échelle ;
une deuxième fonction réseau (202B) prenant en charge la communication sur le réseau cellulaire, la deuxième fonction réseau comprenant :
un service de notification (210B) configuré pour envoyer des messages aux files d'attente abonnées en réponse à des événements de mise à l'échelle, dans lequel la première file d'attente de messages (214A) est abonnée au service de notification ; et
une instance de la deuxième fonction réseau, dans lequel l'adresse IP est attribuée à l'instance en réponse au fait d'être instanciée, dans lequel le service de notification envoie la notification de mise à l'échelle à la première file d'attente de messages (214A) en réponse à l'instance étant instanciée.

9. Réseau cellulaire selon la revendication 8, dans lequel la deuxième fonction réseau comprend en outre :
un deuxième contrôle de sécurité appliquant le filtrage basé IP en utilisant une deuxième liste de préfixes, dans lequel la deuxième liste de préfixes identifie des adresses IP autorisées à communiquer avec la deuxième fonction réseau ;
une deuxième file d'attente de messages configurée pour recevoir des notifications de mise à l'échelle ; et
un deuxième processus de traitement configuré pour consommer les notifications de mise à l'échelle de la deuxième file d'attente de messages, dans lequel le deuxième processus de traitement est configuré pour modifier la deuxième liste de préfixes en réponse à la lecture des notifications de mise à l'échelle.

10. Réseau cellulaire selon la revendication 8, dans lequel la première liste de préfixes identifie des adresses IP autorisées à communiquer avec la première fonction réseau (202A).

11. Réseau cellulaire selon la revendication 8, dans lequel la première fonction réseau (202A) comprend en outre un équilibreur de charge (208A) configuré pour autoriser des communications réseau des adresses IP sur la première liste de préfixes.

12. Réseau cellulaire selon la revendication 8, dans lequel la première fonction réseau comprend en outre un équilibreur de charge (208A) configuré pour bloquer les communications réseau des adresses IP non sur la première liste de préfixes.

13. Réseau cellulaire selon la revendication 12, comprenant en outre une troisième fonction réseau comprenant :
un deuxième contrôle de sécurité appliquant le filtrage basé IP en utilisant une deuxième liste de préfixes ;
une deuxième file d'attente de messages abonnée au service de notification de la deuxième fonction réseau, dans lequel la deuxième file d'attente de messages est configurée pour recevoir la notification de mise à l'échelle comprenant l'adresse IP ; et
un deuxième processus de traitement configuré pour consommer la notification de mise à l'échelle de la deuxième file d'attente de messages, dans lequel le deuxième processus de traitement est configuré pour modifier la deuxième liste de préfixes en utilisant l'adresse IP de la notification de mise à l'échelle en réponse à la lecture de la notification de mise à l'échelle.

14. Réseau cellulaire selon la revendication 13, dans lequel le service de notification de la deuxième fonction réseau envoie la notification de mise à l'échelle à la première fonction réseau et à la troisième fonction réseau en réponse à la première file d'attente de messages et à la deuxième file d'attente de messages étant abonnées au service de notification.

15. Réseau cellulaire selon la revendication 8, comprenant en outre un équilibreur de charge (208A) configuré pour appliquer un droit d'accès minimal sur la base de la première liste de préfixes, dans lequel l'équilibreur de charge achemine une communication ayant une adresse IP masquée basée sur la première liste de préfixes.
